Europäisches Patentamt

European Patent Office

Office européen des brevets

(19)

(11) Publication number: **0 027 320**
**B1**

(12) **EUROPEAN PATENT SPECIFICATION**

(45) Date of publication of patent specification: **06.06.84**

(51) Int. Cl.³: **C 21 B 5/06**

(21) Application number: **80303296.0**

(22) Date of filing: **19.09.80**

(54) **Method for lower-rate operation of blast furnace.**

(30) Priority: **08.10.79 JP 129619/79**

(43) Date of publication of application:
**22.04.81 Bulletin 81/16**

(45) Publication of the grant of the patent:
**06.06.84 Bulletin 84/23**

(84) Designated Contracting States:
**DE FR GB NL**

(56) References cited:
**DE - A - 2 546 502**
**FR - A - 1 245 132**
**FR - A - 1 319 464**
**US - A - 1 742 750**

**Gmelin-Durrer "Metallurgie des Eisens", Band 2,
Teil 2, 1972, pages 274a-249a**

(73) Proprietor: **NIPPON KOKAN KABUSHIKI KAISHA**
**1-2 Marunouchi 1-chome Chiyoda-ku**
**Tokyo 100 (JP)**

(72) Inventor: **Iizuka, Motohiko**
**70, Kitamidai**
**Fukuyama City Hiroshima Pref. (JP)**
Inventor: **Nakatani, Genji**
**59-359, Koyocho**
**Fukuyama City Hiroshima Pref. (JP)**
Inventor: **Kishimoto, Sumiyuki**
**900-3, Shimotakeda Kannabecho**
**Fukayasu Gun Hiroshima Pref. (JP)**

(74) Representative: **Burnside, Michael et al,**
**c/o Michael Burnside & Partners 2 Serjeants' Inn**
**Fleet Street**
**London EC4Y 1HL (GB)**

Courier Press, Leamington Spa, England.

## Description

The present invention relates to a method for operating a blast furnace at a lower level than usual, which permits maintenance of stable furnace conditions, and efficient operation of the blast furnace, while preventing production costs of pig iron from increasing.

A blast furnace, may sometimes be operated to produce less pig iron than is obtained in the usual operation. Such a lower-rate operation can be conducted by decreasing the volume of blast blown into the blast furnace through its tuyeres to provide reducing gas. In other words, a decreased volume of blast air fed to the blast furnace leads to slower reduction of iron ore, thus resulting in a decreased production of pig iron.

When, however, the volume of reducing gas flowing through the blast furnace decreases below a certain limit, because of the above-mentioned decrease in the volume of blast, the flow of the blast in the blast furnace becomes non-uniform across the cross-section of the furnace. More particularly, the distribution of the furnace charge, such as iron ore and coke, within the blast furnace is not uniform, but there are portions of the charge which are relatively rich and poor in voids between pieces of the charge. Therefore, when the volume of blast flowing in the blast furnace decreases below a certain limit, the blast will tend to pass only through those portions which are rich in voids between pieces of the furnace charge, and not through those portions which are poor in such voids. As a result, the reduction of iron ore in the blast furnace cannot proceed uniformly, resulting in the furnace conditions becoming unstable and formation of deposits on the furnace wall. Such deposits cause partial stagnation of the descent of the charge through the blast furnace, a phenomenon known as hanging, which in turn causes slips in which broken deposits result in sudded descent of the charge. Consequently, the speed of descent of the charge through the blast furnace becomes non-uniform and the furnace conditions deteriorate extremely.

A lower rate of production of pig iron in a blast furnace can also be achieved by periodically and temporarily discontinuing blowing of the above-mentioned blast through the tuyeres into the blast furnace. When blowing of blast into the blast furnace is discontinued, however, the charge in the furnace is not heated during this period (the blowoff). The interior of the blast furnace is therefore cooled, and this may make it impossible to discharge pig iron and slag from the blast furnace. Blowoff causes also unstable furnace conditions.

Attempts to solve the above-mentioned problems have included adding, to blast air blown into the blast furnace, nitrogen gas as inert gas not contributing to the reduction of iron ore.

According to Japanese Patent Publication No. 19,481/72 up to 40 vol.% of nitrogen gas can be added to a blast to be blown into the tuyeres of a blast furnace.

Japanese Patent Provisional Publication No. 76,104/78 describes a process which comprises directing $N_2$ gas containing at least 3% $O_2$, discharged from an oxygen generating plant, into a blast main connected to the inlet of a blower for a blast furnace.

According to such methods, by blowing a blast enriched with nitrogen gas at a prescribed rate into the blast furnace through the tuyeres, the rate of reduction of iron ore is descreased, even if the total volume of blast blown into the blast furnace remains constant. As a result, this method allows a decrease in pig iron production, while preventing furnace conditions from becoming unstable.

Such methods, however, involve higher production costs of pig iron, because of the high price of nitrogen gas. Also, the increase in the nitrogen content of the blast largely reduces the calorific value of blast furnace gas recovered from the top of the furnace. Since the aforementioned blast furnace gas is utilized as a fuel for heating furnaces in an ironworks, the decrease in its calorific value adversely affects the operation of the ironworks as a whole.

It has been the usual practice, on the other hand, in the operation of a blast furnace, to inject an auxiliary fuel, such as heavy oil, to act as a fuel and a reducing agent, through the tuyeres, together with the blast, with a view to reducing the consumption of coke per ton of produced pig iron (the coke rate). Recently, however, petroleum oils, such as heavy oil, have been in short supply and their price has frequently increased. It is therefore becoming more common not to inject such an auxiliary fuel, but to employ coke alone.

In conventional operation, the auxiliary fuel blown through the tuyeres is decomposed near the tuyere exits into such reducing gases as carbon monoxide and hydrogen. The decomposition of the auxiliary fuel, being an endothermic reaction, causes a decrease in the temperature within the blast furnace near the tuyere exits. In conventional blast furnace operation, therefore, the region around the tuyere exits is kept at an appropriate temperature by the temperature-decreasing effect of the above-mentioned endothermic reaction. When operating with coke only, however, without employing an auxiliary fuel, and endothermic reaction does not take place in the region around the tuyeres. The temperature around the tuyere exits therefore becomes excessively high, resulting in unstable furnace conditions. This instability is attributable to the fact that the ash in the coke burnt near the tuyere exits causes production of slag rich in silicon oxide $(SiO_2)$ which floats up in a fluid form and condenses at the bosh of the furnace, thus impairing gas permeability through the blast furnace.

Therefore, when carrying out operation with coke only, without using an auxiliary fuel such as heavy oil, it is necessary to reduce the temperature of the region around the tuyere exits. For this purpose, the following methods have been employed:

(1) decreasing the temperature of the blast blown through the tuyeres; and,

(2) adding steam to the blast blown through the tuyeres, thereby causing an endothermic reaction between steam and coke, and thereby decreasing the temperature near the tuyere exits.

In the above-mentioned methods, however, the heat available for reducing iron ore in the blast furnace is decreased, either by the reduction of the blast temperature or by the endothermic reaction caused by steam near the tuyere exits. It becomes therefore necessary to compensate for the above-mentioned decrease in the available heat by increasing the quantity of coke charged into the blast furnace. When using coke only, without using an auxiliary fuel such as heavy oil, therefore, there would be a considerable increase in coke consumption per ton of pig iron (coke rate) and an increase in production costs of pig iron.

Even when an auxiliary fuel such as heavy oil, is being used, decreasing the quantity of injected auxiliary fuel involves the same problems as in the above-mentioned operation not using an auxiliary fuel.

For these reasons, there has been a keen demand for the development of a method for operating a blast furnace, which does not lead to deteriorated furnace conditions, prevents iron production costs from increasing, and does not cause decrease in the calorific value of blast furnace gas recovered from the furnace top, when the furnace is operated to produce a lower output of pig iron, or when coke only is used, without using an auxiliary fuel such as heavy oil as fuel and reducing agent, or when a decreased quantity of such an auxiliary fuel is used. Such a method, however, has not as yet been proposed.

An object of the present invention is to provide a method for lower-rate operation of a blast furnace, which, when conducting an operation of a blast furnace based on coke only as fuel and reducing agent without using an auxiliary fuel such as heavy oil as fuel and reducing agent, does not lead to deteriorated furnace conditions.

Another object of the present invention is to provide a method for lower-rate operation of a blast furnace, which does not result in a decrease in the calorific value of blast furnace gas recovered from the furnace top.

The invention relates to a method for operating a blast furnace which has a plurality of tuyeres around the periphery of the lower portion thereof and coupled to at least one hot stove for heating air to be blown into said blast furnace, and into which only coke is charged as fuel and reducing agent, which comprises adding a blast furnace gas containing CO and $H_2$ to air to form a gas mixture; feeding said gas mixture into said hot stove to heat said gas mixture in said hot stove thereby to oxidize CO into $CO_2$ and $H_2$ into $H_2O$, to form a blast air enriched with $CO_2$ and $H_2O$ and further heated through said oxidation reaction; and blowing said blast air through said plurality of tuyeres into the lower portion of said blast furnace to bring said blast air into contact with red-hot coke in the lower portion of the interior of said blast furnace to cause an endothermic reaction with said red-hot coke thereby to control the calorific value at the portion of the interior of said blast furnace around said tuyeres. French Patent Specification No. 1,319,464 describes such a method.

The invention is characterized in that the amount of said blast air obtained from said hot stove blown into said blast furnace is an amount substantially equal to that of a blast air which would be blown into said blast furnace without addition of a blast furnace gas, thereby decreasing the pig iron production from said blast furnace as compared to the pig iron production which would have been obtained if a substantially equal amount of a blast air without addition of a blast furnace gas had been used, without deteriorating the furnace conditions.

When conducting a lower-rate operation by the method of the present invention, blast furnace gas recovered from the top of a blast furnace is added in a prescribed ratio to blast air before this air is preheated in a hot stove. Table 1 provides an example of the chemical composition of blast furnace gas.

TABLE 1

| $N_2$ | CO | $CO_2$ | $H_2$ | $H_2O$ |
|---|---|---|---|---|
| 53.5 wt.% | 21.5 wt.% | 22.5 wt.% | 2.5 wt.% | 20 g/Nm³ |

After adding a blast furnace gas having the chemical composition mentioned above to blast air before preheating in a hot stove, the blast air contains CO, $CO_2$ and $H_2$. It is then fed to the hot stove and heated to a prescribed temperature, CO and $H_2$ react with $O_2$, so that CO is oxidized to $CO_2$, and $H_2$ is oxidized to $H_2O$. The blast air is thus converted into a blast containing $CO_2$ and $H_2O$ and additionally heated by the above-mentioned oxidation. When this treated blast is blown through the tuyeres into a blast furnace at a prescribed rate, it reacts with red-hot coke in the blast furnace near the tuyere exits,

so that $CO_2$ in the blast is converted into $CO$, and $H_2O$ in the blast is converted into $H_2$. These reactions produce an endothermic effect near the tuyere exits.

Table 2 shows changes in the chemical composition and in the volume ($Nm^3$) at the inlet and the exit of the hot stove and in the regions around the tuyere exits in the blast furnace, of conventional blast air, and a blast (hereinafter referred to as "1% BF gas-containing blast") prepared by feeding a gas comprising 99 vol.% air, and 1 vol.% blast furnace gas to a hot stove and therein converting $CO$ into $CO_2$, and $H_2$ into $H_2O$.

In Table 2, columns "A", "B" and "C" set out respectively the chemical composition and the volume per $Nm^3$ by constituents of a conventional blast at the inlet of a hot stove at the outlet of the hot stove, and at the tuyere exit. Columns "A'", "B'" and "C'" set out corresponding figures for the 1% BF gas-containing blast.

TABLE 2

| | Conventional blast | | | 1% BF gas-containing blast | | |
|---|---|---|---|---|---|---|
| | "A" at hot stove inlet | "B" at hot stove exit | "C" at tuyere exits | "A'" at hot stove inlet | "B'" at hot stove exit | "C'" at tuyere exits |
| $N_2$ | $Nm^3$ 0.7841 | 0.7841 | 0.7841 | $Nm^3$ 0.7815 | 0.7815 | 0.7815 |
| $O_2$ | $Nm^3$ 0.2084 | 0.2084 | — | $Nm^3$ 0.2063 | 0.2052 | — |
| CO | — | — | 0.4243 | $Nm^3$ 0.0021 | — | 0.4269 |
| $CO_2$ | — | — | — | $Nm^3$ 0.0022 | 0.0043 | — |
| $H_2$ | — | — | 0.0075 | $Nm^3$ 0.0002 | — | 0.0079 |
| $H_2O$ | $Nm^3$ 0.0075 | 0.0075 | — | $Nm^3$ 0.0077 | 0.0079 | — |
| Total | $Nm^3$ 1.0000 | | | $Nm^3$ 1.0000 | | |
| Volume ratio relative to blast at hot stove inlet | 1.0000 | 1.0000 | 1.2159 "a" | 1.0000 | 0.9989 | 1.2163 "a'" |

As is clear from Table 2 above, in the case of the conventional blast, the volume "a" ($Nm^3$) at the tuyere exits is 1.2159 times the volume at the hot stove inlet, whereas, in the case of the 1% BF gas-containing blast, the volume "a'" ($Nm^3$) at the tuyere exits is 1.2163 times the volume at the hot stove inlet. Therefore, when using the 1% BF gas-containing blast, the volume ($Nm^3$) of the blast at the tuyere exits, as expressed by the ratio "a'/a", would be 1.0003 times as large as that of the conventional blast, as is evident from the increasing volume ($Nm^3$).

Table 3 shows heat outputs at the tuyere exits when using the conventional blast and when using the 1% BF gas-containing blast, as expressed in the total heat balance produced in all the relevant reactions.

TABLE 3

| | Heat output in operation with conventional blast (Kcal/ton) | Heat output in operation with 1% BF gas-containing blast (Kcal/ton) |
|---|---|---|
| $C+1/2\ O_2=CO$ (exothermic reaction) | +491.23 | +483.69 |
| $H_2O+C=H_2+CO$ (water gas reaction) | −9.51 | −10.02 |
| $CO_2+C=2CO$ (carbon dioxide reduction reaction) | — | −7.91 |
| Heat held by blast | +415.20 | +415.20 |
| Heat output in hot stove | — | +6.40 |
| Total heat output | +896.92 | +887.36 |

As is evident from Table 3, the heat output at the tuyere exits in the blast furnace is 887.36 Kcal/ton in the case of the 1% BF gas-containing blast, which is smaller than 896.92 Kcal/ton in the case of the conventional blast. This is attributable to the fact that $CO_2$ and $H_2O$ contained in the blast react with red-hot coke at the tuyere exits, and the endothermic effect produced from the conversion of $CO_2$ into CO and $H_2O$ into $H_2$, causes a decrease in the heat output.

Accordingly, in order to supply, when using the 1% BF gas-containing blast, a heat output equal to that obtained with the use of the conventional blast, it would be necessary to judge from Table 3, to blow blast in a volume, as expressed by the ratio "b/b'", 1.0108 times that of the conventional blast. When the 1% BF gas-containing blast is blown in a volume 1.0108 times the volume of the conventional blast, the volume of gases produced at the tuyere exits would be 1.0111 times that produced with the conventional blast, as shown by the following equation:

$$1.0108 \times \frac{a'}{a} = 1.0111 \qquad (1)$$

Therefore, when the 1% BF gas-containing blast is blown into the blast furnace in the same volume as the conventional blast the iron production can be reduced by about 1.1% as compared with the use of the conventional blast, as is calculated by the following equation (2):

$$(\frac{1-1.0111}{1.0111}) \times 100 = -1.098 \doteqdot -1.1 \qquad (2)$$

The effect of altering the ratio of blast furnace gas added to the blast air will now be illustrated.

Table 4 gives the heat outputs at the tuyere exits and the production decrease ratios as compared with the conventional operation, for various amounts of blast furnace gas added to the air before heating in the hot stove; i.e. respectively 1 vol.% (air: 99 vol.%, blast furnace gas: 1 vol.%), 3 vol.% (air: 97 vol.%, blast furnace gas: 3 vol.%), 5 vol.% (air: 95 vol.%, blast furnace gas: 5 vol.%), and 8 vol. % (air: 92 vol.%, blast furnace gas: 8 vol.%).

TABLE 4

| | Ratio of blast furnace gas to air | | | |
|---|---|---|---|---|
| | 1 vol.% | 3 vol.% | 5 vol.% | 8 vol.% |
| Heat output at tuyere exits (Kcal/ton) | 887.36 | 867.99 | 848.96 | 819.84 |
| Production decrease ratio as compared with conventional operation | 1.1 | 3.2 | 5.3 | 8.6 |

5

In Table 4, the production decrease ratio was calculated using the figures given for the heat output at the tuyere exits from Table 3.

As is clear from Table 4, it is possible to increase the production decrease ratio as the ratio of added blast furnace gas to air is increased.

As is evident from the description given above, when operating a blast furnace, it is possible to reduce the iron production without impairing the furnace conditions by feeding air mixed with blast furnace gas into a hot stove, and therein oxidizing CO contained in the blast furnace gas into $CO_2$ and $H_2$ into $H_2O$, to provide a blast thus containing $CO_2$ and $H_2O$ and additionally heated by the above-mentioned oxidation, and then blowing this blast into a blast furnace at a prescribed rate. The above-mentioned additional heating of the blast permits a reduction of the consumption of coke in the blast furnace, or a decrease of the heating temperature of the blast in the hot stove. The blast furnace gas added to the air, being recovered from the blast furnace top and used in recycle, leads to only a very slight increase in the iron production costs. Furthermore, in this method of operation, the blast furnace gas recovered from the furnace top, having a smaller nitrogen content than blast furnace gas from a conventional operation in which the blast air is mixed with nitrogen, gives a high heat output and is therefore superior in fuel utilization efficiency.

We now illustrate the case in which a blast furnace is operated with coke only, and not with an auxiliary fuel such as heavy oil.

In accordance with the present invention, a prescribed volume of blast furnace gas is added to blast air before feeding to a hot stove, CO and $H_2$ contained in the blast furnace gas are respectively oxidized to $CO_2$ and $H_2O$, and the resulting blast containing $CO_2$ and $H_2O$, additionally heated by the above-mentioned oxidation, is blown into a blast furnace through its tuyeres. This blast reacts with red-hot coke around the tuyere exits, and thus, $CO_2$ and $H_2O$ in the blast are respectively converted into CO and $H_2$. The endothermic effect of these reactions causes a decrease in the temperature around the tuyere exits. The temperature of the blast blown into the blast furnace can therefore be increased to a higher level depending on the temperature decrease around the tuyere exits. As a result, the increase in the coke consumption per ton of pig iron, which results when operating with coke only, can be minimized. The above-mentioned additional heating of the blast allows reduction of the consumption of coke in the blast furnace, or decrease of the heating temperture of the blast in the hot stove.

Table 5 gives results when operating with injection of heavy oil as the auxiliary fuel, with coke only and a conventional blast, and with coke only and a 1% BF gas-containing blast.

TABLE 5

|  | Operation with oil injection (oil rate; 50 kg/ton) | Operation based on coke only | |
|---|---|---|---|
|  |  | With conventional blast | With 1% BF gas-containing blast |
| Coke rate (kg/ton) | 400 | 480 | 476 |
| Oil rate (kg/ton) | 50 | 0 | 0 |
| Blast temp. (°C) | 1,300 | 1,050 | 1,090 |
| Blast humidity (g/Nm³) | 10 | 20 | 20 |
| Combustion temp. at tuyere exits (°C) | 2,420 | 2,300 | 2,300 |

As is evident from Table 5, when operating with coke only and a conventional blast, it is necessary, for the reasons mentioned above, to decrease the blast temperature by 250°C or by 19.3% as compared with the use of oil injection. To compensate for the resulting decrease in heat output, the coke rate should be increased by 80 kg/ton or by 20%. When using the 1% BF gas-containing blast, however, it is possible to increase the blast temperature by 40°C, or by about 4%, and hence to decrease the coke rate by about 0.84% as compared with the operation using the conventional blast.

When, in the above-mentioned operation with coke only and using the 1% BF gas-containing blast, the blast volume is made equal to the volume of the conventional blast, the iron production decreases as described in the above-mentioned lower-rate operation. Therefore, in order to give the same iron production as in operation with the conventional blast, the blast volume should be increased over that of the conventional blast.

Even when operation with injection of an auxiliary fuel is conducted with a decreased consumption of the auxiliary fuel, for example, heavy oil consumption per ton of pig iron (oil rate), the

6

method of the present invention avoids an increase in the coke rate. More specifically, when the operation with oil injection is conducted with a decreased oil rate, it is necessary to increase the consumption of coke per ton of pig iron by an amount corresponding to the decrease in the oil consumption, for the same reasons as in the above-mentioned operation based on coke only. When, however, the BF gas-containing blast is blown into the blast furnace in accordance with the present invention, the increase in the coke rate can be prevented, as in the above-mentioned operation based on coke only.

Table 6 shows results when operating with heavy oil injection, for a conventional blast at an oil rate of 50 kg/ton, for a 1% BF gas-containing blast at an oil rate of 40 kg/ton, and for a 1% BF gas-containing blast at an oil rate of 30 kg/ton.

TABLE 6

| | Operation at oil rate of 50 kg/ton (conventional blast) | Operation at oil rate of 40 kg/ton (1% BF gas-containing blast) | Operation at oil rate of 30 kg/ton (1% BF gas-containing blast) |
|---|---|---|---|
| Coke rate (kg/ton) | 400 | 412 | 423 |
| Blast temp. (°C) | 1,300 | 1,300 | 1,300 |
| Blast humidity (g/Nm³) | 10 | 10 | 10 |
| Combustion temp. at tuyere exits (°C) | 2,420 | 2,457 | 2,494 |

As is clear from Table 6, even when operating with a 20% decreased oil rate of 40 kg/ton, when using the 1% BF gas-containing blast, the increase in the coke rate is only 3% above that in the ordinary operation with an oil rate of 50 kg/ton. Similarly, even with a 40% decreased oil rate of 30 kg/ton, when using the 1% BF gas-containing blast, the increase in the coke rate is only 5.7% above that in the ordinary operation with an oil rate of 50 kg/ton. In order to achieve the same iron production in this operation as in the operation with the conventional blast, it is necessary to increase the blast volume over that of the conventional blast, as mentioned above.

We now illustrate an operation based on coke only as mentioned above, conducted with blasts obtained with various ratios of blast furnace gas added to the blast air before heating in the hot stove. Table 7 gives operating results obtained with ratios of blast furnace gas to the air for blast of 1 vol.%, 3 vol.%, 5 vol.% and 8 vol.%, as previously described in the example of the lower-rate operation.

TABLE 7

| | Amount of blast furnace gas added to blast air | | | |
|---|---|---|---|---|
| | 1 vol.% | 3 vol.% | 5 vol.% | 8 vol.% |
| Coke rate (kg/ton) | 476 | 474 | 471 | 464 |
| Oil rate (kg/ton) | 0 | 0 | 0 | 0 |
| Blast temp. (°C) | 1,090 | 1,130 | 1,170 | 1,270 |
| Blast humidity (g/Nm³) | 20 | 15 | 10 | 8 |
| Combustion temp. at tuyere exits (°C) | 2,300 | 2,300 | 2,300 | 2,300 |

As is evident from Table 7, it is possible to decrease the coke rate by increasing the amount of blast furnace gas added to the blast air.

As described above, when a blast containing $CO_2$ and $H_2O$, which is obtained by adding a prescribed volume of blast furnace gas to blast air before it is preheated in a hot stove, is blown into a blast furnace through the tuyeres, it is possible to conduct an economical operation without impairing the blast furnace conditions when operating at a lower rate of production, or when using coke only as fuel and reducing agent, or when using a decreased amount of an auxiliary fuel. In this case, the volume

7

of blast furnace gas added to the blast air shougd preferably be up to 10 vol.%, based on the total volume of the blast air and blast furnace gas. When the volume of blast furnace gas added to the blast air is over 10 vol.%, the combustion temperature in the hot stove becomes much higher, thus causing such problems as breakdown of bricks of the hot stove and the occurrence of explosive combustion. The blast furnace gas may be added to the blast air at any position before the supply of the blast air to the hot stove, and may be added at an appropriate position in the pipe before or after the blower. The blast furnace gas should, however, be well mixed with the blast air before it is fed into the hot stove, to avoid accident.

According to the present invention, as described above in detail, an efficient operation of a blast furnace can be conducted without impairing the furnace conditions, while preventing the coke rate and the iron production costs from increasing, and while minimizing the decrease in the calorific value of blast furnace gas recovered from the furnace top. Particularly when a lower-rate operation is conducted, so as to adjust iron production, or when carrying out an operation based on coke only, without using an auxiliary fuel such as heavy oil, as fuel and reducing agent, or an operation with a decreased consumption of an auxiliary fuel to cope with increasing oil prices, industrially very useful effects are provided.

## Claims

1. A method for operating a blast furnace which has a plurality of tuyeres around the periphery of the lower portion thereof and coupled to at least one hot stove for heating air to be blown into said blast furnace, and into which only coke is charged as fuel and reducing agent, which comprises: adding a blast furnace gas containing CO and $H_2$ to air to form a gas mixture; feeding said gas mixture into said hot stove to heat said gas mixture in said hot stove thereby to oxidize CO into $CO_2$ and $H_2$ into $H_2O$, to form a blast air enriched with $CO_2$ and $H_2O$ and further heated through said oxidation reaction; and blowing said blast air through said plurality of tuyeres into the lower portion of said blast furnace to bring said blast air into contact with red-hot coke in the lower portion of the interior of said blast furnace to cause an endothermic reaction with said red-hot coke thereby to control the calorific value at the portion of the interior of said blast furnace around said tuyeres; characterized in that:

the amount of said blast air obtained from said hot stove blown into said blast furnace is an amount substantially equal to that of a blast air which would be blown into said blast furnace without addition of a blast furnace gas, thereby decreasing the pig iron production from said blast furnace as compared to the pig iron production which would have been obtained if a substantially equal amount of a blast air without addition of a blast furnace gas had been used, without deteriorating the furnace conditions.

2. A method according to Claim 1 characterized in that the amount of said blast furnace gas added to said air is up to 10 vol.%, based on the total volume of said air and said blast furnace gas.

## Patentansprüche

1. Verfahren zum Betreiben eines Hochofens mit einer Anzahl von um den Umfang seines Unterteils herum angeordneten und mit mindestens einem Winderhitzer zum Erhitzen der in den Hochofen einzublasenden Luft verbundenen Windformen, wobei der Hochofen nur mit Koks als Brennstoff und Reduktionsmittel beschickt wird, bei dem die Luft unter Bildung eines Gasgemisches mit einem CO und $H_2$ enthaltenden Hochofen (gicht) gas versetzt wird, das Gasgemisch zu seiner Erhitzung in den Winderhitzer eingespeist wird, um dabei CO in $CO_2$ und $H_2$ in $H_2O$ zu oxidieren und damit eine mit $CO_2$ und $H_2O$ angereicherte und durch die Oxidationsbehandlung weiter erhitzte Blasluft zu erzeugen, und die Blasluft über die Anzahl der Windformen in den Unterteil des Hochofens eingeblasen wird, um sie in Berührung mit dem rotglühenden Koks im Unterteil des Innenraums des Hochofens zu bringen und damit eine endotherme Reaktion im rotglühenden Koks herbeizuführen, wodurch der Brenn- oder Heizwert in dem um die Windformen herum gelegenen Bereich des Hochofeninneren geregelt oder gesteuert wird, dadurch gekennzeichnet,

daß die Menge der vom Winderhitzer gewonnenen, in den Hochofen eingeblasenen Blasluft im wesentlichen der Blasluftmenge gleich ist, die ohne Zusatz eines Hochofengases in den Hochofen eingeblasen werden würde, so daß die Roheisenerzeugung im Hochofen im Vergleich zur Roheisenerzeugung, die erzielt werden würde, wenn eine im wesentlichen gleiche Blasluftmenge ohne Zusatzt eines Hochofengases verwendet worden wäre, ohne Verschlechterung der Ofenbedingungen vermindert wird.

2. Verfahren nach Anspruch 1, dadurch gekennzeichnet, daß die der Luft zugesetzte Menge an Hochofengas bis zu 10 Vol.-%, bezogen auf die Gesamtmenge aus Luft und Hochofen (gicht) gas, beträgt.

# 0 027 320

## Revendications

1. Procédé de conduite d'un haut-fourneau ayant plusieurs tuyères placées autour de la périphérie de sa partie inférieure et couplées à au moins un four récupérateur destiné à chauffer l'air à souffler dans le haut-fourneau, et dans lequel du coke est chargé comme combustible et agent réducteur, le procédé comprenant: l'addition d'un gaz de haut-fourneau contenant CO et $H_2$ à de l'air afin qu'ils forment un mélange gazeux, la transmission du mélange gazeux dans le four récupérateur afin que le mélange soit chauffé dans ce four et que CO s'oxyde en $CO_2$ et $H_2$ s'oxyde en $H_2O$, avec formation d'un air de vent enrichi en $CO_2$ et ayant subi un chauffage supplémentaire par la réaction d'oxydation, et le soufflage de l'air du vent par les tuyères dans la partie inférieure du haut-fourneau afin que l'air du vent soit au contact de coke au rouge dans la partie inférieure de l'intérieur du haut-fourneau et provoque une réaction endothermique avec le coke au rouge si bien que le pouvoir calorifique est réglé dans la partie de l'intérieur du haut-fourneau qui entoure les tuyères, caractérisé en ce que:

la quantité d'air du vent obtenu à partir du four récupérateur et soufflé dans le haut-fourneau est en quantité sensiblement égale à celle de l'air du vent qui serait soufflé dans le haut-fourneau en l'absence de l'addition du gaz de haut-fourneau, si bien que la production de fonte par le haut-fourneau est réduite par rapport à la production de fonte qui serait obtenue si une quantité pratiquement égale d'air du vent, sans addition de gaz de haut-fourneau, avait été utilisée, et sans que les conditions de fonctionnement du haut-fourneau soient perturbées.

2. Procédé selon la revendication 1, caractérisé en ce que la quantité de gaz de haut-fourneau ajoutée à l'air peut atteindre 10% en volume par rapport au volume total de l'air et du gaz de haut-fournea.

9